# FASCICULE DE BREVET EUROPEEN

(11) **EP 0 709 034 B1**
(45) Date de publication et mention de la délivrance du brevet: **24.10.2001**
(21) Numéro de dépôt: 95201862.0
(22) Date de dépôt: 07.07.1995
(51) Int. Cl.: A23C 9/15, A23C 9/13, A23C 19/05, A23J 1/20

(54) **Procédé de fabrication d'un agent de texture pour produits laitiers**
Verfahren zur Herstellung eines Textur gebenden Mittels für Milchprodukte
Process for preparing a texture forming agent for milk products

(30) Priorité: 13.08.1994 EP 94112683
(43) Date de publication de la demande: 01.05.1996
(73) Titulaire: SOCIETE DES PRODUITS NESTLE S.A., 1800 Vevey (CH)
(72) Inventeur: Bisson, Jean-Pierre, F-14000 Caen (FR); Prella, Giovanni, I-13100 Vercelli (IT)
(74) Mandataire: Archambault, Jean

(56) Documents cités:
- EP-A- 0 250 623
- EP-A- 0 283 101
- EP-A- 0 515 246
- EP-A- 0 520 581
- FR-A- 2 160 479
- INDUSTRIE ALIMENTARI, vol. XXX, no. 2, 1991, pages 117-119, XP002036451 F. BRAY: "Tecnologica per il gelato senza grasso"
- DMZ LEBENSMITTELINDUSTRIE UND MILCHWIRTSCHAFT, vol. 114, no. 29, 1993, pages 848-852, XP000381847 J. KAMMERLEHNER: "Simplesse 100- Dry Simplesse 100"

## Description

La présente invention se rapporte aux agents de texture à base de composants purement laitiers pour produits laitiers, notamment pour yaourts, fromages frais, crèmes glacées ou sauces.

De nombreux développements ont été effectués dans le domaine des substituts de matière grasse dans les produits laitiers exempts de matière grasse. On a ainsi obtenu des améliorations de texture en mettant en oeuvre des protéines de lactosérum micronisées. On peut citer, par exemple, US-A-5096731 qui concerne un procédé d'amélioration de la texture des yaourts maigres par addition de protéine microparticulaire à l'état de concentré liquide. Selon ce document, la protéine et traitée thermiquement de manière ménagée et soumise à un fort cisaillement dans un cuiseur. La protéine mise en oeuvre est soit la caséine en présence de blanc d'oeuf et de pectine, soit la protéine de lactosérum seule. Cependant, les produits obtenus à partir de lactosérum seul à titre d'agent de texture présentent des défauts de conservation dans le temps.

EP-A- 520 581 concerne des substituts de matière grasse en poudre à base de protéines de lactosérum dénaturées.

C'est pourquoi on a utilisé jusqu'à présent un mélange gélatine-protéine sérique comme agent de texture des produits maigres du genre des yaourts. Un tel agent convient du point de vue organoleptique, mais les produits ne peuvent malheureusement pas bénéficier de l'appellation yaourt car ils contiennent des ingrédients étrangers au lait. De plus, l'agent de texture doit être dissout séparément à chaud dans l'eau avant de pouvoir être incorporé dans le lait destiné à la production des yaourts.

EP-A- 515 246 concerne des compositions protéiques à texture onctueuse, élaborées à partir de caséinates et de microparticules coagulées de protéines de lactosérum.

L'invention a pour but de remédier aux inconvénients des méthodes d'amélioration connues des produits laitiers, en particulier maigres.

Le procédé selon l'invention est caractérisé par le fait que l'on prépare une matière première lactique contenant de la caséine et des protéines sériques dans un rapport pondéral caséine: protéines sériques de 70:30 à 40:60, que l'on ajuste le cas échéant le pH à 6,1-6,7 par addition d'un agent acidifiant, que l'on soumet le mélange à un traitement thermique à 70-95°C pendant 1-15 min de manière à former des coprécipités, qu'on le soumet le cas échéant à un fort cisaillement et qu'on le sèche.

Une matière première lactique selon l'invention peut être un lait écrémé ou un produit équivalent à un lait écrémé, par exemple un babeurre doux, additionné de protéines sériques. Les protéines sériques proviennent de lactosérum doux et sont obtenues par une méthode qui maintient en grande partie leur état natif, par exemple par ultrafiltration, puis séchage et elles se présentent alors sous forme de concentrat. Dans le contexte de l'invention, on entend par "en grande partie à l'état natif", le fait que les protéines sériques sont peu dénaturées, au maximum à environ 20 %, par exemple lors de leur séchage.

Pour mettre en oeuvre le procédé, on ajoute les protéines sériques, par exemple sous forme de poudre, à du lait écrémé, à un taux de matières sèches du mélange d'environ 10-13 % en poids, dans les proportions pondérales de caséine: protéines sériques de 70: 30 à 40: 60, de préférence de 60: 40 à 45: 55 et avantageusement par exemple d'environ 55: 45. Si nécessaire, on ajuste le pH du mélange à 6,1-6,7 et de préférence à environ 6,4, par addition d'un agent acidifiant. L'agent acidifiant peut être un acide de qualité alimentaire, par exemple l'acide lactique ou apporté par une fermentation lactique, par exemple une acidification biologique produisant l'acide lactique nécessaire. Le mélange doit être mis en solution sous agitation pendant le temps nécessaire à la réhydratation des protéines sériques, de préférence par exemple environ 30 min.

On le fait passer ensuite dans un appareillage dans lequel il est traité thermiquement.

On peut utiliser à cet effet un ou de préférence deux échangeurs à surface raclée montés en série, qui assurent une montée en température, par exemple à 70-72°C, puis à une température d'environ 85°C et un maintien à cette température pendant environ 10 min. On peut remplacer le second échangeur à surface raclée par un échangeur à plaques ou tubulaire, lequel assure le temps de passage correspondant au maintien à la température supérieure désirée indiquée précédemment.

On peut également utiliser un échangeur à plaques associé à une pompe positive, à condition de réaliser une montée progressive en température, puis un maintien, par exemple pendant environ 5 min. à environ 90°C. On peut encore envisager un chauffage ohmique produisant un résultat équivalent.

Sans vouloir se lier à une quelconque théorie, on peut penser que le traitement thermique appliqué permet la dénaturation des protéines sériques et leur hydratation, de manière à former des coprécipités avec la caséine.

Après le traitement thermique, on peut soumettre le mélange thermisé de préférence à une homogénéisation dans des conditions poussées, en un ou deux étages, à une pression globale de 300-400 bar, de préférence en deux étages, par exemple d'abord à environ 300-350 bar dans le premier étage, puis à environ 50 bar dans le second, de préférence à une température d'environ 65-70°C . En variante on peut utiliser tout appareil assurant un fort cisaillement, par exemple un moulin colloïdal ou un dispositif de lissage. Ce cisaillement est requis dans le cas où on désire utiliser le produit obtenu comme agent de texture dans la fabrication de produits laitiers du genre des yaourts ou des fromages frais, mais n'est pas nécessaire si l'on désire fabriquer un substitut de lait écrémé.

Une fois le cisaillement effectué, on concentre le liquide, par exemple dans un évaporateur, puis on le sèche par pulvérisation dans une tour de séchage, dans des conditions moyennes, c'est à dire pas trop sévères.

L'agent de texture préparé par le procédé de l'invention peut être utilisé à raison de 2 à 6 %, de préférence à environ 3 % en poids dans le lait écrémé, ou dans un lait partiellement écrémé ou entier, de préférence cru pour des raisons organoleptiques.

L'agent de texture peut être utilisé dans les produits frais fermentés, par exemple les yaourts étuvés ou brassés, les fromages frais, les crèmes glacées et les sauces. Dans le cas de l'utilisation dans la fabrication de yaourts brassés, l'étape d'acidification de la matière première lors de la fabrication de l'agent de texture n'est pas nécessaire.

Les exemples ci-après illustrent l'invention. Dans ceux-ci, les pourcentages et parties sont en poids, sauf indication contraire.

### Exemple 1

### Production d'un agent de texture pour produits frais fermentés

On mélange du lait écrémé cru avec des protéines de lactosérum doux de fromagerie ultrafiltrées ayant un taux de dénaturation inférieur à 20 % dans les proportions caséine: protéines sériques 55: 45, puis on agite le mélange pendant 30 min. On acidifie ensuite le mélange avec une solution aqueuse d'acide lactique à 35 %, jusqu'au pH de 6,4.

En utilisant deux échangeurs à surface raclée montés en série, qui assurent une montée en température, à 70-72°C, puis à une température de 85°C, on fait passer le mélange pendant 10 min. On refroidit le floculat fin ainsi obtenu à 65-70°C sur un échangeur à plaques, puis on l'homogénéise à la même température sur un appareil à deux têtes, à 300 bar sur la première tête et 50 bar sur la seconde. On concentre alors l'homogénéisat dans un évaporateur à flots tombants jusqu'à 30-35 % de matière sèche, puis on séche le concentrat dans une tour de séchage avec un courant d'air entrant à 190°C et sortant à 90°C. La poudre finale a un extrait sec de l'ordre de 95 %.

### Exemple 2

On procède comme à l'exemple 1 à ceci près que le traitement thermique est effectué sur un échangeur à plaques à 70°C, puis 90°C, avec un temps de chambrage de 5 min. La suite des opérations est la même que précédemment à partir de l'homogénéisation.

### Exemple 3

On procède comme à l'exemple 1 à ceci près que l'acidification amenant le mélange au pH de 6,4 a lieu par voie biologique, avec des ferments lactiques mésophiles ou thermophiles.

### Exemples 4-8

On procède comme à l'exemple 1 en variant uniquement le pH avant le traitement thermique. Les agents de texture obtenus diffèrent par leurs propriétés fonctionnelles lorsqu'ils sont ajoutés à des yaourts étuvés maigres à raison de 3 %, ce que montre leur force de gel mesurée sur analyseur de texture Stevens avec un module de diamètre 25 mm, une longeur de 20 mm et une vitesse de pénétration de 1 mm/s, comme indiqué dans le tableau 1 ci-après.

**Tableau 1**

| Exemple | 4 | 5 | 6 | 7 | 8 |
|---|---|---|---|---|---|
| pH | 6,1 | 6,3 | 6,4 | 6,5 | 6,7 |
| Force de gel, g | 100 | 135 | 138 | 172 | 192 |

On remarque que le gel de l'exemple 4 est mou, cependant que celui de l'exemple 8 est ferme.

### Exemples 9-11

On procède comme à l'exemple 1 en variant seulement le rapport caséine: protéines sériques avant le traitement thermique. Les agents de texture obtenus diffèrent par leurs propriétés fonctionnelles et organoleptiques lorsqu'ils sont ajoutés à des yaourts étuvés maigres à raison de 3 %. Les résultats de leur évaluation organoleptique par un jury de dégustateurs sont indiqués dans le tableau 2 ci-après.

**Tableau 2**

| Exemple | 9 | 10 | 11 |
|---|---|---|---|
| Rapport caséine: protéines sériques | 70: 30 | 55: 45 | 40: 60 |
| Dégustation | Texture farineuse | Texture onctueuse | Texture cassante et granuleuse |

### Exemple 12

### Production de yaourt maigre à 0 % de matière grasse, étuvé

Dans 100 parties de lait écrémé on dissout à froid 3 parties de poudre d'agent de texture obtenu selon l'exemple 1 sous agitation. La dissolution s'opère facilement. On traite alors le liquide par réchauffage à 75°C, homogénéisation à 150 bar avec deux étages, pasteurisation à 105°C pendant 2 min, puis refroidissement à 38-40°C. On l'acidifie ensuite par adjonction de ferments du yaourt constitués d'un mélange de lactobacillus bulgaricus et streptococcus thermophilus. On remplit des pots de 125 ml avec le liquide acidifié, on étuve les pots jusqu'à pH 4,7, puis on les refroidit à 8°C et on les entrepose à cette température.

A titre de comparaison, on procède à la fabrication de yaourt maigre à partir de 100 parties de lait écrémé enrichi avec 2,75 parites de poudre de lait écrémé, dissoute à froid dans le lait, auquel on ajoute une solution d'agent de texture du commerce constitué de 75 % de gélatine et de 25 % de concentrat de protéines sériques dénaturées à moins de 20 %. On prépare l'agent de texture par dissolution séparée à 70°C de 0,35 partie dans 2,5 parties d'eau, puis on ajoute la solution au lait enrichi. Le reste des opérations a lieu comme indiqué ci-dessus.

Une dégustation comparative a montré que l'agent de texture préparé selon l'invention apportait une amélioration nette de l'onctuosité et de la sensation de gras. De plus, la fabrication est facilitée du fait qu'il n'est pas nécessaire de dissoudre séparément l'agent de texture.

### Exemple 13

### Production de yaourt nature doux demi-écrémé, étuvé

Dans 100 parties de lait demi-écrémé, à 11g/l de matière grasse, on dissout à froid 3 parties de poudre d'agent de texture obtenu selon l'exemple 1 sous agitation. On traite alors le liquide à 92°C, pendant 6 min., on l'homogénéise à 300 bar avec un étage et à 75°C, puis on le refroidit à 40°C. On l'acidifie ensuite par adjonction de ferments du yaourt constitués d'un mélange de lactobacillus bulgaricus et streptococcus thermophilus. On remplit des pots de 125 ml avec le liquide acidifié, on étuve les pots jusqu'à pH 4,7, puis on les refroidit à 8°C et on les entrepose à cette température.

A titre de comparaison, on procède à la fabrication de yaourt doux demi-écrémé à partir de 100 parties de lait demi-écrémé enrichi avec 3 parties de poudre de lait écrémé, dissoute à froid dans le lait.

Une dégustation comparative a montré que l'agent de texture préparé selon l'invention apportait une amélioration nette de l'onctuosité et de la sensation de gras.

### Exemple 14

### Production de yaourt au lait entier brassé

Dans 100 parties de lait entier, à 35g/l de matière grasse, on dissout à froid 5,5 parties de poudre d'agent de texture obtenu selon l'exemple 1 sous agitation. On traite alors le liquide à 92°C, pendant 6 min., on l'homogénéise à 300 bar avec un étage et à 75°C, puis on le refroidit à 40°C. On l'acidifie ensuite par adjonction de ferments du yaourt constitués d'un mélange de lactobacillus bulgaricus et streptococcus thermophilus, puis on l'étuve en cuve stérile jusqu'à pH 4,7. On lisse ensuite la masse à l'aide d'une vanne à la pression de 1,5 bar, on refroidit à 8°C à l'aide d'un échangeur à plaques, puis on remplit des pots de 125 ml avec le liquide lissé et on les entrepose à cette température.

A titre de comparaison, on procède à la fabrication de yaourt entier brassé à partir de 100 parties de lait entier enrichi avec 5,5 parties de poudre de lait écrémé, dissoute à froid dans le lait.

Une dégustation comparative a montré que l'agent de texture préparé selon l'invention apportait une amélioration nette de l'onctuosité.

### Exemple 15

### Production de fromage frais maigre à 0% de matière grasse

Dans 99 parties de lait écrémé, on dissout 1 partie d'agent de texture préparé selon l'exemple 1 à froid et sous agitation. On pasteurise le liquide à 95°C pendant 5 min, puis on l'envoie en cuve stérilisée maintenue à 20-30°C. On ajoute ensuite 1 ml/100 l de présure animale au 1/10.000 ème et 1 % de ferments mésophiles, puis on laisse acidifier jusqu'à pH 4,4. On sépare alors le caillé sur centrifugeuse à buses de 0,5 mm afin d'obtenir un coagulum de 13 à 19 % de matière sèche. Après refroidissement à 8°C au moyen d'un échangeur tubulaire, on conditionne le produit en pots que l'on entrepose à cette température.

A titre de comparaison, on procède à la fabrication de fromage frais maigre à partir de 100 parties de lait écrémé, sans ajout d'agent de texture.

Une dégustation comparative a montré que l'agent de texture préparé selon l'invention apportait une amélioration nette de l'onctuosité.

## Revendications

1. Procédé de fabrication d'un agent de texture pour produits laitiers, **caractérisé par le fait que** l'on prépare une matière première lactique contenant de la caséine et des protéines sériques dans un rapport pondéral caséine: protéines sériques de 70:30 à 40:60, que l'on ajuste le cas échéant le pH à 6,1-6,7 par addition d'un agent acidifiant, que l'on soumet le mélange à un traitement thermique à 70-95°C pendant 1-15 min de manière à former des coprécipités, qu'on le soumet le cas échéant à un fort cisaillement et qu'on le sèche.

2. Procédé selon la revendication 1, **caractérisé par le fait que** les protéines sériques proviennent de lactosérum doux et sont obtenues par une méthode qui maintient en grande partie leur état natif, c'est à dire qu'elles sont dénaturées au maximum à environ 20 %.

3. Procédé selon la revendication 1, **caractérisé par le fait que** l'on ajuste le pH par addition d'acide lactique ou par une acidification biologique produisant l'acide lactique nécessaire.

4. Procédé selon la revendication 1, **caractérisé par le fait que** le mélange est mis en solution sous agitation pendant le temps nécessaire à la réhydratation des protéines sériques, notamment environ 30 min.

5. Procédé selon la revendication 1, **caractérisé par le fait que** l'on réalise le traitement thermique dans un appareillage assurant une montée progressive en température jusqu'à 85-90°C et un maintien à cette température pendant 5 à 10 min.

6. Procédé selon la revendication 1, **caractérisé par le fait que**, après le traitement thermique, on soumet le mélange thermisé à une homogénéisation dans des conditions poussées, en un ou deux étages, à une pression globale de 300-400 bar et à une température de 65-70°C.

7. Procédé selon la revendication 1, **caractérisé par le fait que** l'on concentre le mélange thermisé dans un évaporateur, puis on le sèche par pulvérisation dans une tour de séchage dans des conditions moyennes.

8. Procédé de fabrication d'un produit laitier à texture améliorée, **caractérisé par le fait qu'**on y incorpore 2 à 6 % en poids d'un agent de texture obtenu par le procédé selon l'une des revendications 1 à 7.

9. Procédé selon la revendication 8, **caractérisé par le fait que** le produit laitier est un produit frais fermenté, notamment un yaourt étuvé ou brassé ou un fromage frais.

10. Procédé selon la revendication 8, **caractérisé par le fait que** le produit laitier est une crème glacée ou une sauce.

## Claims

1. Process for producing a texturizing agent for dairy products, **characterized in that** a milk raw material is prepared containing casein and whey proteins in a weight ratio of casein:whey proteins of 70:30 to 40:60, the pH is optionally adjusted to 6.1-6.7 by adding an acidifying agent, the mixture is subjected to a heat treatment at 70-95°C for 1-15 min so as to form coprecipitates which are optionally subjected to strong shear and are dried.

2. Process according to claim 1, **characterized in that** the whey proteins are derived from basic whey and are obtained by a method which to a large extent maintains their native state, that is to say they are denatured to a maximum of approximately 20%.

3. Process according to claim 1, **characterized in that** the pH is adjusted by adding lactic acid or by biological acidification producing the necessary lactic acid.

4. Process according to claim 1, **characterized in that** the mixture is dissolved with stirring for a period of time necessary to rehydrate the whey proteins, in particular approximately 30 min.

5. Process according to claim 1, **characterized in that** the heat treatment is carried out in an apparatus providing a progressive rise in temperature to 85-90°C and capable of maintaining this temperature for 5 to 10 min.

6. Process according to claim 1, **characterized in that**, after the heat treatment, the heat-treated mixture is subjected to homogenization under stringent conditions, in one or two stages, at an overall pressure of 300-400 bar and at a temperature of 65-70°C.

7. Process according to claim 1, **characterized in that** the heat-treated mixture is concentrated in an evaporator and then spray-dried in a drying tower under moderate conditions.

8. Process for producing a dairy product with an improved texture, **characterized in that** 2 to 6 % by weight of a texturizing agent obtained by the process according to one of claims 1 to 7 is incorporated therein.

9. Process according to claim 8, **characterized in that** the dairy product is a fresh fermented product, in particular a steamed or fermented yoghurt or a fromage frais.

10. Process according to claim 8, **characterized in that** the dairy product is an ice cream or a sauce.

## Patentansprüche

1. Verfahren zur Herstellung eines texturgebenden Mittels für Milchprodukte, **dadurch gekennzeichnet, dass** man einen Milchrohstoff herstellt, der Kasein und Molkeproteine in einem Gewichtsverhältnis Casein:Molkeproteine von 70:30 bis 40:60 enthält, dass man ggf. den pH-Wert durch Beigabe eines Säuerungsmittels auf 6,1 bis 6,7 einstellt, dass man die Mischung 1-15 min einer thermischen Behandlung bei 70-95°C unterzieht, so dass kopräzipitierte Niederschläge gebildet werden, dass man sie ggf. einer starken Scherung unterzieht und dass man sie trocknet.

2. Verfahren nach Anspruch 1, **dadurch gekennzeichnet, dass** die Molkeproteine von Süßmolke stammen und mit einer Methode erhalten werden, bei der ihr nativer Zustand zum großen Teil beibehalten wird, d.h. dass sie maximal zu etwa 20% denaturiert werden.

3. Verfahren nach Anspruch 1, **dadurch gekennzeichnet, dass** man den pH-Wert durch Beigabe von Milchsäure oder durch eine biologische Säuerung, die die erforderliche Milchsäure produziert, einstellt.

4. Verfahren nach Anspruch 1, **dadurch gekennzeichnet, dass** die Mischung unter Rühren während der für die Rehydratisierung der Molkeproteine erforderlichen Zeit, insbesondere während etwa 30 min, in Lösung gebracht wird.

5. Verfahren nach Anspruch 1, **dadurch gekennzeichnet, dass** man die thermische Behandlung in einer Vorrichtung vornimmt, die einen allmählichen Temperaturanstieg bis zu 85-90°C und eine Aufrechterhaltung dieser Temperatur während 5 bis 10 min gewährleistet.

6. Verfahren nach Anspruch 1, **dadurch gekennzeichnet, dass** man nach der thermischen Behandlung die thermisch behandelte Mischung einer Homogenisierung unter strengen Bedingungen in ein oder zwei Schritten mit einem Gesamtdruck von 300-400 bar und einer Temperatur von 65-70°C unterzieht.

7. Verfahren nach Anspruch 1, **dadurch gekennzeichnet, dass** man die thermisch behandelte Mischung in einem Verdampfer konzentriert und dann durch Sprühtrocknung in einem Trockenturm bei mäßigen Bedingungen trocknet.

8. Verfahren zur Herstellung eines Milchprodukts mit verbesserter Textur, **dadurch gekennzeichnet, dass** man ihm 2 bis 6 Gew.-% eines in dem Verfahren nach einem der Ansprüche 1 bis 7 hergestellten texturgebenden Mittels beimengt.

9. Produkt nach Anspruch 8, **dadurch gekennzeichnet, dass** das Milchprodukt ein fermentiertes Frischprodukt, insbesondere ein ofengekochter oder gerührter Joghurt oder ein Frischkäse ist.

10. Verfahren nach Anspruch 8, **dadurch gekennzeichnet, dass** das Milchprodukt eine Eiscreme oder eine Sauce ist.
